# EUROPÄISCHE PATENTSCHRIFT

(11) **EP 1 705 061 B1**
(45) Veröffentlichungstag und Bekanntmachung des Hinweises auf die Patenterteilung: **22.07.2015**
(21) Anmeldenummer: 06110618.3
(22) Anmeldetag: 03.03.2006
(51) Int. Cl.: B60Q 1/12

(54) **Vorrichtung und Verfahren zum Steuern des Schwenkwinkels eines Kurvenlichtscheinwerfers für ein Kraftfahrzeug in Abhängigkeit vom Kurvenradius und der Geschwindigkeit**
Device and method to controll a bending-light adjustment angle in function of the road curvature and of the vehicle speed
Appareil et procédé pour contrôler l'angle de rotation d'un projecteur virage en fonction de la courbure d'un virage et de la vitesse du véhicule

(30) Priorität: 24.03.2005 DE 102005013600
(43) Veröffentlichungstag der Anmeldung: 27.09.2006
(73) Patentinhaber: Hella KGaA Hueck & Co., 59552 Lippstadt (DE)
(72) Erfinder: Christensen, Dirk, 59557 Lippstadt (DE); Karas, Peter, 59556 Lippstadt (DE); Rottland, Torsten, 59555 Lippstadt (DE)

(56) Entgegenhaltungen:
- DE-A1- 10 220 373
- DE-A1- 19 803 002
- FR-A1- 2 857 309

## Beschreibung

### STAND DER TECHNIK

Die Erfindung betrifft eine Vorrichtung und ein Verfahren zum Steuern des Schwenkwinkels eines Kurvenlichtscheinwerfers für ein Kraftfahrzeug in Abhängigkeit vom Kurvenradius einer zu durchfahrenden Kurve und der Geschwindigkeit des Kraftfahrzeugs.

Bekannte Geräte der eingangs genannten Art weisen ein Steuergerät zum Ermitteln eines einzustellenden Schwenkwinkels und zum Bereitstellen des ermittelten Schwenkwinkels zu einer weiteren Verarbeitung auf. Das Steuergerät ermittelt dabei in einem ersten Bereich der Geschwindigkeit des Kraftfahrzeugs zwischen einer unteren Grenze und einer oberen Grenze einen begrenzenden Schwenkwinkel. Dieser begrenzende Schwenkwinkel begrenzt den einzustellenden und von dem Steuergerät bereitzustellenden Schwenkwinkel. Der begrenzende Schwenkwinkel hängt linear von der Geschwindigkeit des Kraftfahrzeugs ab.

Die bekannten Kurvenlichtscheinwerfer sind so eingerichtet, dass sie von dem Steuergerät nur während der Fahrt angesteuert werden, um den Schwenkwinkel an den Kurvenradius anzupassen. Die Kurvenlichtscheinwerfer sind ferner so eingerichtet, dass sie im Stand in eine Position verschwenkt werden, die einer Geradeausfahrt entspricht, unabhängig vom Lenkwinkel, d. h. zum Einschlag des Lenkrades oder der Vorderräder. Das kann insbesondere beim Losfahren des Fahrzeugs aus einer Parkposition, zum Beispiel in einer Parkbucht zwischen zwei weiteren Fahrzeugen, zu einem ruckartigen Verschwenken der Kraftfahrzeugscheinwerfer führen, wenn nämlich bereits im Stand gelenkt wird.

Um dieses ruckartige Verschwenken der Kraftfahrzeugscheinwerfer zu verhindern, wird der Schwenkwinkel in dem ersten Bereich der Geschwindigkeit zwischen der unteren und der oberen Grenze durch den begrenzenden Schwenkwinkel begrenzt. Die Kraftfahrzeugscheinwerfer können in Abhängigkeit der Geschwindigkeit nur durch den begrenzenden Schwenkwinkel begrenzte Maße verschwenkt werden. Ein ruckartiges Verschwenken der Kraftfahrzeugscheinwerfer ist dadurch grundsätzlich weitgehend ausgeschlossen.

In der Vergangenheit hat sich jedoch gezeigt, dass die Begrenzung des Schwenkwinkels nach der vorbeschriebenen Art und Weise nicht vollständig ausreichend ist. Probleme rühren insbesondere aus der ungenauen Auflösung der Geschwindigkeitssensoren im unteren Geschwindigkeitsbereich insbesondere im Bereich zwischen 0 und 2 km/h. Eine zuverlässige Erfassung der Geschwindigkeit ist bei manchen Sensoren erst ab 5 km/h möglich. Liegt die Geschwindigkeit unter dieser Grenze ermittelt der Geschwindigkeitssensor zu geringe Geschwindigkeit oder gar den Stillstand des Fahrzeugs. Ein Verschwenken der Kraftfahrzeugscheinwerfer unterbleibt dann, obwohl es eigentlich gewünscht ist, da das Fahrzeug rollt. Wird dann eine Geschwindigkeit erreicht, die der Sensor zuverlässig ermittelt und die dann auch von dem Sensor an das Steuergerät übermittelt wird, erkennt das Steuergerät eine sprungartig ansteigende Geschwindigkeit, die dann einen relativ hohen Schwenkwinkel zulässt, der durch den begrenzenden Schwenkwinkel definiert ist. Das Steuergerät kann dann somit ein Verschwenken bis zu diesem relativ hohen begrenzenden Schwenkwinkel zulassen, was in diesen Ausnahmefällen zu einem ruckartigen Verschwenken der Kraftfahrzeugscheinwerfer in geringem Umfang führen kann.

Obwohl dieses ruckartige Verschwenken der Kraftfahrzeugscheinwerfer in geringem Umfang nicht sicherheitstechnisch von Belang ist, wirkt es auf den Benutzer des Kraftfahrzeugs oftmals störend. Gelegentlich gibt das ruckartige Verschwenken der Kraftfahrzeugscheinwerfer Anlass zur Besorgnis, obwohl keine Störung im Kraftfahrzeug vorliegt. Ein ruckartiges Verschwenken der Kraftfahrzeugscheinwerfer selbst in diesem geringen Umfang ist daher grundsätzlich unerwünscht.

Der Erfindung liegt daher die Aufgabe zugrunde, die eingangs genannte Vorrichtung zum Steuern des Schwenkwinkels so zu verbessern, dass es selbst im Bereich geringer Geschwindigkeiten nicht zu ruckartigen Schwenkbewegungen des Kraftfahrzeugscheinwerfers kommen kann.

### VORTEILE DER ERFINDUNG

Diese Aufgabe wird erfindungsgemäß durch eine Vorrichtung mit den Merkmalen des Anspruchs 1 gelöst. Demnach ist ein Filter vorgesehen. Mittels des Steuergeräts ist in einem unterhalb der unteren Grenze des ersten Bereichs der Geschwindigkeit liegenden zweiten Bereich der Geschwindigkeit der begrenzenden Schwenkwinkel ebenfalls ermittelbar. Zur Vermeidung von Sprüngen des Schwenkwinkels ist der begrenzende Schwenkwinkel in dem zweiten Bereich der Geschwindigkeit durch das Filter gefiltert wird und im zweiten Bereich der Geschwindigkeit begrenzt der gefilterte begrenzende Schwenkwinkel den einzustellenden und bereitzustellenden Schwenkwinkel.

Anders verhält es sich offenbar beim Stand der Technik, wie er aus dem Dokument DE 102 20 373 A1 bekannt ist. Dort wird für den Bereich, den man als zweiten Geschwindigkeitsbereich identifizieren könnte, nämlich dem Geschwindigkeitsbereich zwischen 5 km/h und 30 km/h, ebenfalls ein begrenzender Schwenkwinkel ermittelt. Die Ermittlung erfolgt allerdings unmittelbar aus der gleichen Größe wie im ersten Geschwindigkeitsbereich für Geschwindigkeiten größer als 30 km/h, d.h. unmittelbar aus der Fahrzeuggeschwindigkeit, wie es aus dem Abs. [0042] des Dokuments DE 102 20 373 A1 hervorgeht. Es wird also beim Stand der Technik nicht zunächst ein begrenzender d.h. maximaler Schwenkwinkel ermittelt, der anschließend gefiltert wird.

In der Figur 13 und in der Beschreibung des Dokuments DE 102 20 373 A1 wird zwar die Funktion f2 als Funktion f2(DS) und somit als Funktion des Ablenkwinkelsignals DS, d.h. des Schwenkwinkels bezeichnet. Dieses kann aber wie man aus der Darstellung der Abs. [0041] und [0042] ohne weiteres herleiten kann nicht zutreffend sein, da aus den genannten Textstellen eindeutig hervorgeht, dass der maximale Ablenkwinkel von der Geschwindigkeit abhängt. Unabhängig davon bleibt es bei dem Unterschied zwischen dem Stand der Technik und der erfindungsgemäßen Vorrichtung, da dann die Funktion f2, sofern man sie mit einem Filter gleichsetzt, den Schwenkwinkel als Eingangsgröße hätte und nicht den maximalen oder begrenzenden Schwenkwinkel.

Der zweite Bereich der Geschwindigkeit kann dabei dem Bereich entsprechen, in dem der Geschwindigkeitssensor keine fehlerfreie Auflösung des Geschwindigkeitssignals garantiert.

Vorzugsweise ist das Filter zweiter Ordnung und der zweite Bereich der Geschwindigkeit hat die kleinste messbare Geschwindigkeit als untere Grenze.

Ein erfindungsgemäßes Steuergerät kann so eingerichtet sein, dass von einer Begrenzung des ermittelten Schwenkwinkels durch den gefilterten begrenzenden Schwenkwinkel zu einer Begrenzung des ermittelten Schwenkwinkels durch den ungefilterten begrenzenden Schwenkwinkel wechselbar ist, wenn die Differenz zwischen dem ungefilterten begrenzenden Schwenkwinkel und dem gefilterten begrenzenden Schwenkwinkel einen vorgegebenen Wert unterschreitet, insbesondere gleich Null ist. Der begrenzende Schwenkwinkel kann dann insbesondere bei höheren Geschwindigkeiten wieder linear von der Geschwindigkeit abhängen.

Das Steuergerät kann ferner so eingerichtet sein, dass von einer Begrenzung des ermittelten Schwenkwinkels durch den gefilterten begrenzenden Schwenkwinkel zu einer Begrenzung des ermittelten Schwenkwinkels durch den ungefilterten begrenzenden Schwenkwinkel nur dann welchselbar ist, wenn zugleich die Geschwindigkeit im ersten Bereich liegt, d. h., wenn die Geschwindigkeit größer als die obere Grenze des zweiten Bereichs ist.

Gemäß der Erfindung kann der gefilterte begrenzende Schwenkwinkel von einem erfindungsgemäßen Steuergerät als vom Steuergerät ermittelter Schwenkwinkel zur weiteren Verarbeitung bereitgestellt werden.

Verfahren zum Steuern des Schwenkwinkels, die mit erfindungsgemäßen Vorrichtungen durchgeführt werden können, sind in den Ansprüchen 6 bis 9 angegeben.
- Fig. 2: eine grafische Darstellung des begrenzenden Schwenkwinkels in Abhängigkeit von der Geschwindigkeit bei einem einzustellenden Schwenkwinkel kleiner als der maximal einstellbare Schwenkwinkel,
- Fig. 3: eine grafische Darstellung des begrenzenden Schwenkwinkels in Abhängigkeit von der Geschwindigkeit bei sich änderndem einzustellenden Schwenkwinkel und
- Fig. 4: eine grafische Darstellung des begrenzenden Schwenkwinkels in Abhängigkeit von der Geschwindigkeit bei einem sich ändernden einzustellenden Schwenkwinkel.

### BESCHREIBUNG DER AUSFÜHRUNGSBEISPIELE

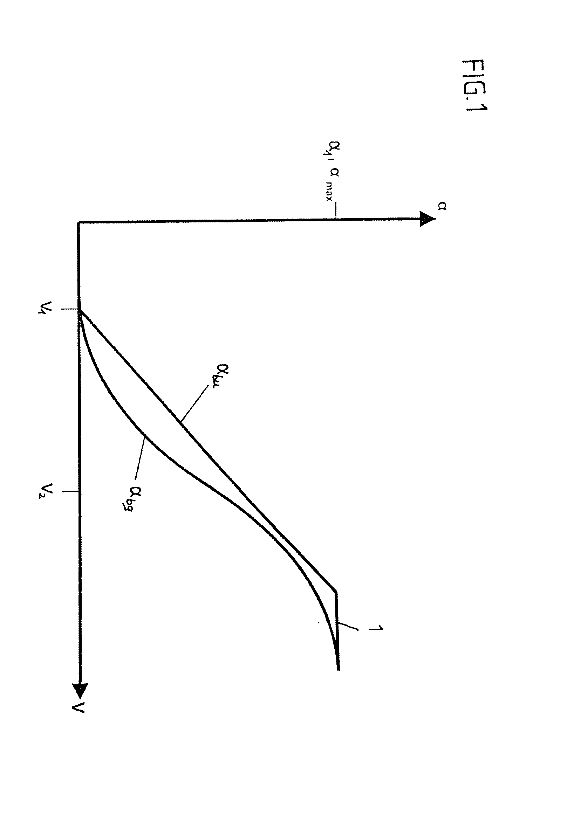

Die Diagramme der Fig. 1 bis 4 zeigen die Funktion des begrenzenden Schwenkwinkels α_{b} als ungefilterten Schwenkwinkel α_{bu} in Abhängigkeit von der Geschwindigkeit und als gefilterten Schwenkwinkel α_{bg} in Abhängigkeit von der Geschwindigkeit v. Ferner ist der maximal einstellbare Einstellwinkel beziehungsweise Schwenkwinkel αₘₐₓ angegeben, den die Kraftfahrzeugscheinwerfer einnehmen können. Mit dem Bezugszeichen 1 ist in den Figuren jeweils der Schwenkwinkel 1 angegeben, der eingestellt werden soll, d. h., den die Kraftfahrzeugscheinwerfer angepasst an den Kurvenradius einnehmen sollen.

Die in den Fig. 1 bis 4 dargestellten Verläufe der Funktionen der begrenzenden Schwenkwinkel α_{bu} entsprechen im Grunde genommen dem, was aus dem Stand der Technik bekannt ist. Die Begrenzung verhindert bereits ein ruckartiges Verstellen der Kraftfahrzeugscheinwerfer beim Anfahren des Fahrzeugs. Die Verstellung der Kraftfahrzeugscheinwerfer beziehungsweise das Verschwenken der Kraftfahrzeugscheinwerfer in Abhängigkeit vom Kurvenradius erfolgt nur, wenn das Kraftfahrzeug bewegt wird, d. h., eine Geschwindigkeit größer als 0 hat. Wird jedoch zum Beispiel beim Aus- oder Einparken der Lenkwinkel des Kraftfahrzeugs im Stand verändert, und wird dann mit diesem veränderten Einschlagwinkel die Fahrt begonnen, verschwenkt der Kraftfahrzeugscheinwerfer ruckartig, wenn nicht zumindest eine Begrenzung des Schwenkwinkels in Form der linearen Abhängigkeit von der Geschwindigkeit erfolgte die maximal den Schwenkwinkel α_{bu} zulässt.

In der Praxis hat sich jedoch gezeigt, dass aufgrund verschiedener Effekte, wie zum Beispiel der Ansprechschwelle der Geschwindigkeitssensoren auch bei der Verwendung der Begrenzung des Schwenkwinkels durch die Funktion α_{bu}(v) nicht ausreicht, um beim Einsetzen der Bewegung ein ruckartiges Verspringen, wenn auch in kleinerem Maße, zu verhindern.

Um dieses verbleibende ruckartige Verspringen zu verhindern, wird das den Schwenkwinkel α begrenzende Signal des Schwenkwinkels α_{bu} mittels eines Filters vorzugsweise zweiter Ordnung gefiltert. Dieses ergibt der Funktion des Schwenkwinkels der Funktion α_{bg}(v). Wie in den Darstellungen der Fig. 1 bis 4 erkennbar, wird dadurch ein sanftes Ansteigen des begrenzenden Schwenkwinkels α_{bg} erreicht. Insbesondere im Bereich einer unteren Grenze v₁ wird ein ruckartiges Verspringen des Schwenkwinkels verhindert. Es kann maximal der Schwenkwinkel α_{bg} eingenommen werden.

In Fig. 1 ist ein Fall dargestellt, bei dem maximal mögliche Schwenkwinkel dem einzustellenden Schwenkwinkel entspricht.

Dieser Schwenkwinkel α₁ wird bei einem Verfahren nach dem Stand der Technik erreicht, sobald der Schwenkwinkel in die Waagerechte 1 schwenkt. Zuvor ist er über den gesamten Bereich beginnend mit v₁, ab dem verwendbare Geschwindigkeitsangaben vom Sensor geliefert werden, bis zum Einschwenken auf die Waagerechte 1 durch die Funktion α_{bu}(v) begrenzt. Erfindungsgemäße wird dagegen der Schwenkwinkel durch die Funktion α_{bg}(v) begrenzt.

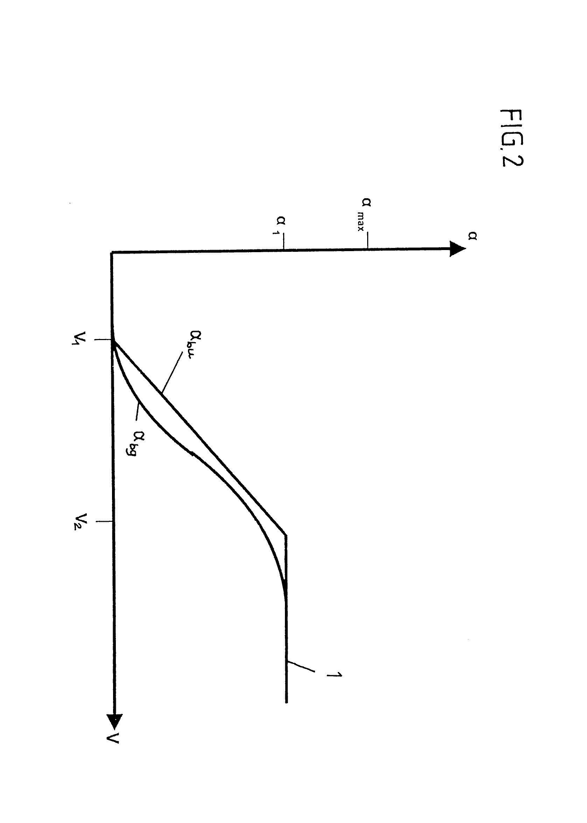

Die Darstellung der Fig. 2 entspricht der der Fig. 1 weitgehend mit der Maßgabe, dass der einzustellende Schwenkwinkel α₁ geringer als der maximal mögliche einstellbare Einstellwinkel αₘₐₓ ist.

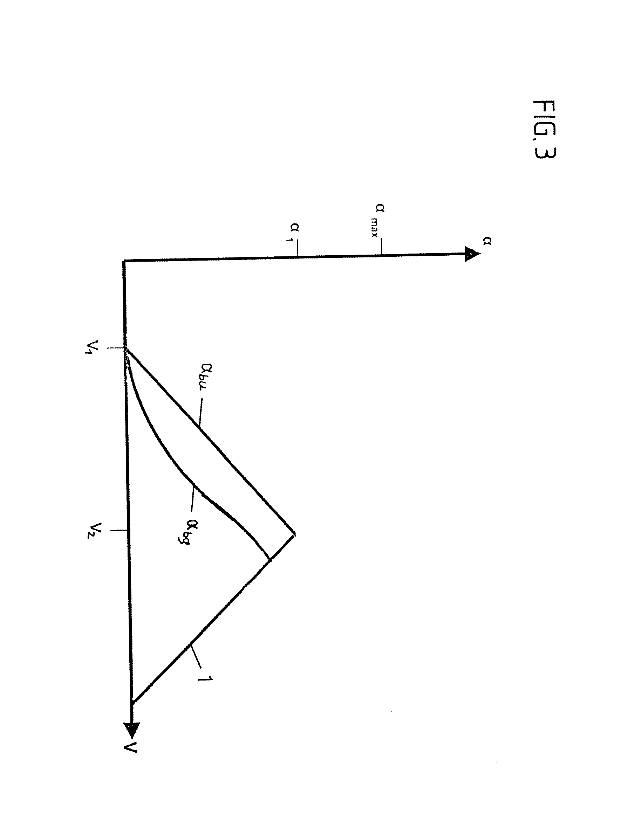

In Fig. 3 ist dagegen ein Fall dargestellt, bei dem der einzustellende Schwenkwinkel α₁ beim Erreichen der Geschwindigkeit v₂ verringert wird, beispielsweise, weil das Lenkrad in die Gegenrichtung gedreht wird.

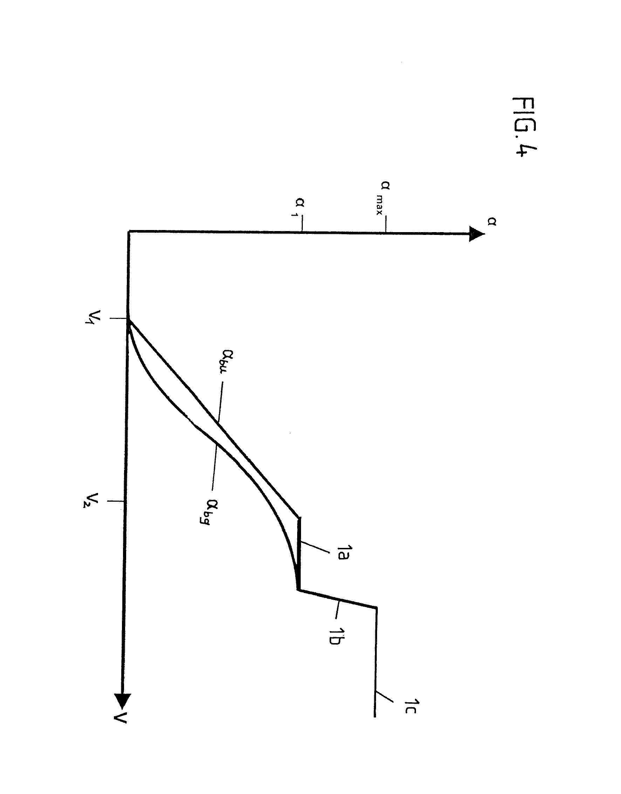

In dem Anwendungsbeispiel gemäß Fig. 4 soll zunächst ein Schwenkwinkel α₁ eingestellt werden, der durch die Funktion α_{bg}(v) erreicht wird. Anschließend wird jedoch der Schwenkwinkel erhöht. Da der Schwenkwinkel in einem Geschwindigkeitsbereich erhöht wird, der jenseits der oberen Grenze eines zweiten Bereichs liegt, in dem die Waagerechte 1_{c} erreicht ist, wird der begrenzende Schwenkwinkel nicht gefiltert.

In den Figuren ist mit v₂ jeweils die Grenze zwischen dem ersten Bereich und dem zweiten Bereich angegeben, in dem grundsätzlich der ungefilterte begrenzende Schwenkwinkel zur Begrenzung von sprungartigen Veränderungen des einzustellenden Schwenkwinkels verwendet werden soll. Um beim Wechsel von dem gefilterten begrenzenden Schwenkwinkel zum ungefilterten begrenzenden Schwenkwinkel jedoch Sprünge zu vermeiden, wird erst dann im gefilterten begrenzenden Schwenkwinkel zu dem ungefilterten begrenzenden Schwenkwinkel übergegangen, wenn die Differenz zwischen beiden Schwenkwinkeln kleiner als ein vorgegebenes Maß ist. Dieses vorgegebene Maß wird jedoch in den Fig. 1 bis 4 dargestellten Fällen nicht erreicht.

## Patentansprüche

1. Vorrichtung zum Steuern des Schwenkwinkels eines Kurvenlichtscheinwerfers für ein Kraftfahrzeug in Abhängigkeit vom Kurvenradius und der Geschwindigkeit (v) mit einem Steuergerät zum Ermitteln eines einzustellenden Schwenkwinkels (α₁) und zum Bereitstellen des ermittelten Schwenkwinkels (α₁) zu einer weiteren Verarbeitung,
- wobei das Steuergerät in einem ersten Bereich der Geschwindigkeit (v) zwischen einer unteren Grenze (v₂) und einer oberen Grenze einen begrenzenden Schwenkwinkel (α_{bu}) ermittelt und in einem unterhalb der unteren Grenze (v₂) des ersten Bereichs der Geschwindigkeit liegenden zweiten Bereich der Geschwindigkeit den begrenzenden Schwenkwinkel (α_{bu}) ebenfalls ermittelt,
- der den einzustellenden und bereitzustellenden Schwenkwinkel (α₁) begrenzt und
- der vorzugsweise linear von der Geschwindigkeit (v) abhängt,
**dadurch gekennzeichnet,**
**dass** ein Filter vorgesehen ist,
**dass** zur Vermeidungen von Sprüngen des Schwenkwinkels der begrenzenden Schwenkwinkel (α_{bu}) in dem zweiten Bereich der Geschwindigkeit durch das Filter gefiltert wird und im zweiten Bereich der Geschwindigkeit der gefilterte begrenzende Schwenkwinkel den einzustellenden und bereitzustellenden Schwenkwinkel (α₁) begrenzt.

2. Vorrichtung nach Anspruch 1, **dadurch gekennzeichnet, dass** das Filter ein Filter zweiter Ordnung ist.

3. Vorrichtung nach Anspruch 1 oder 2, **dadurch gekennzeichnet, dass** der zweite Bereich der Geschwindigkeit die kleinste meßbare Geschwindigkeit als untere Grenze (v₁) hat.

4. Vorrichtung nach einem der Ansprüche 1 bis 3, **dadurch gekennzeichnet, dass** das Steuergerät so eingerichtet ist, dass von einer Begrenzung des ermittelten Schwenkwinkels durch den gefilterten begrenzenden Schwenkwinkel (α_{bg}) zu einer Begrenzung des ermittelten Schwenkwinkels durch den ungefilterten begrenzenden Schwenkwinkel (α_{bu}) wechselbar ist, wenn die Differenz zwischen dem ungefilterten begrenzenden Schwenkwinkel (α_{bu}) und dem gefilterten begrenzenden Schwenkwinkel (α_{bg}) einen vorgegebenen Wert unterschreitet.

5. Vorrichtung nach Anspruch 4, **dadurch** gekennzeichent, dass das Steuergerät so eingerichtet ist, dass von einer Begrenzung des ermittelten Schwenkwinkels durch den gefilterten begrenzenden Schwenkwinkels (α_{bg}) zu einer Begrenzung des ermittelten Schwenkwinkels durch den ungefilterten begrenzenden Schwenkwinkel (α_{bu}) nur dann wechselbar ist, wenn zugleich die Geschwindigkeit im ersten Bereich liegt.

6. Verfahren zum Steuern des Schwenkwinkels eines Kurvenlichtscheinwerfers für ein Kraftfahrzeug in Abhängigkeit vom Kurvenradius und der Geschwindigkeit (v) mit einem Steuergerät zum Ermitteln und Bereitstellen eines einzustellenden Schwenkwinkels, wobei gemäß einer vorzugsweise linearen Funktion aus der Geschwindigkeit (v) ein begrenzender einstellbarer Schwenkwinkel (α_{bu}) ermittelt wird, sofern die Geschwindigkeit (v) in einem ersten Bereich der Geschwindigkeit (v) zwischen einer unteren Grenze (v₂) und einer oberen Grenze oder in einem unterhalb der unteren Grenze (v₂) des ersten Bereichs der Geschwindigkeit liegenden zweiten Bereich der Geschwindigkeit ist und der begrenzende Schwenkwinkel (α_{bu}) im ersten Bereich den einzustellenden und bereitzustellenden Schwenkwinkel (α₁) begrenzt,
**dadurch gekennzeichnet,**
**dass** der ermittelte begrenzende Schwenkwinkel (α_{bu}) gefiltert wird, sofern die Geschwindigkeit (v) nach einem Anfahren von Null ansteigend im zweiten Bereich liegt, und im zweiten Bereich der Geschwindigkeit der gefilterte begrenzende Schwenkwinkel den einzustellenden und bereitzustellenden Schwenkwinkel (α₁) begrenzt.

7. Verfahren nach Anspruch 6, **dadurch gekennzeichnet, dass** das bei einer Erhöhung der Geschwindigkeit (v) der von dem gefilterten begrenzenden Schwenkwinkel (α_{bg}) auf den ungefilterten begrenzenden Schwenkwinkel (α_{bu}) übergegangen wird, wenn die Differenz der beiden Werte einen vorgegebenen Wert unterschreitet.

8. Verfahren nach Anspruch 7, **dadurch gekennzeichnet, dass** nur dann zu der Begrezung durch den ungefilterten begrenzenden Schwenkwinkel (α_{bu}) übergegeangen wird wenn die Geschwindigkeit (v) die untere Grenze des ersten Bereichs überschreitet.

9. Verfahren nach Anspruch 8, **dadurch gekennzeichnet, dass** anschließend bei einer Erhöhung oder Herabsetzung der Geschwindigkeit (v) der ermittelte Schwenkwinkel durch den ungefilterten begrenzenden Schwenkwinkel (α_{bu}) begrenzt wird, sofern die Geschwindigkeit (v) im ersten Bereich oder im zweiten Bereich liegt.

## Claims

1. Device for the control of the swivel angle of a bend lighting lamp for a motor vehicle depending on bend radius and speed (v) with a control device for the determination of a swivel angle (α₁) to be adjusted and for the provision of the determined swivel angle (α₁) for further processing,
- wherein the control device determines a limiting swivel angle (α_{bu}) in a first range of the speed (v) between a bottom limit (v₂) and a top limit and also determines the limiting swivel angle (α_{bu}) in a second range of speed lying below the bottom limit (v₂) of the first range of the speed,
- limiting the swivel angle (α₁) to be adjusted and to be provided and
- which depends preferably in a linear manner on the speed (v),
**characterized in that**
a filter is provided,
that, to avoid off-sets in the swivel angle, the limiting swivel angle (α_{bu}) is filtered by the filter in the second range of speed and
in the second range of speed, the filtered, limiting swivel angle limits the swivel angle (α₁) to be adjusted and to be provided.

2. Device according to Claim 1, **characterized in that** the filter is a second order filter.

3. Device according to Claim 1 or 2, **characterized in that** the second range of speed has the smallest measurable speed as its bottom limit (v₁).

4. Device according to one of the Claims 1 to 3, **characterized in that** the control device is set up so that before a limitation of the determined swivel angle by the filtered, limiting swivel angle (α_{bg}), a change to a limitation of the determined swivel angle by the unfiltered, limiting swivel angle (α_{bu}) can be made, should the difference between the unfiltered, limiting swivel angle (α_{bu}) and the filtered, limiting swivel angle (α_{bg}) fall below a given value.

5. Device according to Claim 4, **characterized in that** the control device is set up so that a change from a limitation of the determined swivel angle by the filtered, limiting swivel angle (α_{bg}) to a limitation of the determined swivel angle by the unfiltered, limiting swivel angle (α_{bu}) is only possible when at the same time the speed lies within the first range.

6. Procedure for the control of the swivel angle of a bend lighting lamp for a motor vehicle as a function of the bend radius and the speed (v) with a control unit for the determination and provision of a swivel angle which is to be adjusted, wherein a limiting, adjustable swivel angle (α_{bu}) is determined from the speed according to a preferably linear function, if the speed (v) in a first range of the speed (v) is between a bottom limit (v₂) and a top limit or in a second range of the speed lying below the bottom limit (v₂) of the first range of speed, and the limiting swivel angle (α_{bu}) limiting the swivel angle (α₁) to be adjusted and provided in the first range,
**characterized in that**
the determined limiting swivel angle (α_{bu}) is filtered, if the speed (v) lies within a second range after starting at zero, and in a second range of speed the filtered, limiting swivel angle limits the swivel angle (α₁) to be adjusted and provided.

7. Procedure according to Claim 6, **characterized in that**, when increasing the speed (v), a change is made from the filtered, limiting swivel angle (α_{bg}) to the unfiltered, limiting swivel angle (α_{bu}), if the difference between the two values falls below a given value.

8. Procedure according to Claim 7, **characterized in that** a change to the unfiltered limiting swivel angle (α_{bu}) only takes place when the speed (v) exceeds the bottom limit of the first range.

9. Procedure according to Claim 7, **characterized in that** subsequently, with a increase or decrease of the speed (v), the determined swivel angle is limited by the unfiltered, limiting swivel angle (α_{bu}), if the speed (v) lies in the first range or in the second range.

## Revendications

1. Dispositif pour contrôler l'angle de pivotement d'un projecteur virage pour un véhicule automobile en fonction du rayon de courbure de virage et de la vitesse (v) avec une unité de contrôle pour déterminer un angle de pivotement à ajuster (α₁) et pour mettre à disposition l'angle de pivotement déterminé (α₁) pour un traitement ultérieur,
- l'unité de contrôle déterminant un angle de pivotement limitant (α_{bu}) dans une première plage de la vitesse (v) entre une limite inférieure (v₂) et une limite supérieure et déterminant également l'angle de pivotement limitant (α_{bu}) dans une deuxième plage de la vitesse qui se trouve au-dessous de la limite inférieure (v₂) de la première plage de la vitesse,
- qui limite l'angle de pivotement à ajuster et à mettre à disposition (α₁) et
- qui, de préférence, dépend linéairement de la vitesse (v),
**caractérisé en ce**
**qu'**un filtre est prévu,
**que** pour éviter des à-coups de l'angle de pivotement, l'angle de pivotement limitant (α_{bu}) est filtré dans la deuxième plage de la vitesse par le filtre et
dans la deuxième plage de la vitesse l'angle de pivotement limitant filtré limite l'angle de pivotement à ajuster et à mettre à disposition (α₁).

2. Dispositif selon la revendication 1, **caractérisé en ce que** le filtre est un filtre secondaire.

3. Dispositif selon la revendication 1 ou 2, **caractérisé en ce que** la limite inférieure (v₁) de la deuxième plage de la vitesse est la vitesse la plus faible à mesurer.

4. Dispositif selon l'une des revendications 1 à 3, **caractérisé en ce que** l'unité de contrôle est configurée de manière à pouvoir changer d'une limite de l'angle de pivotement déterminé par l'angle de pivotement limitant filtré (α_{bg}) à une limite de l'angle de pivotement déterminé par l'angle de pivotement limitant non filtré (α_{bu}), lorsque la différence entre l'angle de pivotement limitant non filtré (α_{bu}) et l'angle de pivotement limitant filtré (α_{bg}) dépasse une valeur prédéterminée.

5. Dispositif selon la revendication 4, **caractérisé en ce que** l'unité de contrôle est configurée de manière à ne pouvoir changer d'une limite de l'angle de pivotement déterminé par l'angle de pivotement limitant filtré (α_{bg}) à une limite de l'angle de pivotement déterminé par l'angle de pivotement limitant non filtré (α_{bu}), que si la vitesse se trouve dans la première plage en même temps.

6. Procédé pour contrôler l'angle de pivotement d'un projecteur virage pour un véhicule automobile en fonction du rayon de courbure de virage et de la vitesse (v) avec une unité de contrôle pour déterminer et mettre à disposition un angle de pivotement à ajuster, un angle de pivotement limitant ajustable (α_{bu}) étant déterminé de la vitesse (v), de préférence selon une fonction linéaire, dans la mesure où la vitesse (v) dans une première plage de la vitesse (v) se trouve entre une limite inférieure (v₂) et une limite supérieure ou dans une deuxième plage de la vitesse au-dessous de la limite inférieure (v₂) de la première plage de la vitesse et l'angle de pivotement limitant (α_{bu}) dans la première plage limite l'angle de pivotement à ajuster et à mettre à disposition (a₁),
**caractérisé en ce que**
l'angle de pivotement limitant déterminé (α_{bu}) est filtré, dans la mesure où la vitesse (v) se trouve dans la deuxième plage après un démarrage partant de zéro et dans la deuxième plage de la vitesse l'angle de pivotement limitant filtré limite l'angle de pivotement à ajuster et à mettre à disposition (α₁).

7. Procédé selon la revendication 6, **caractérisé en ce que** lors d'une augmentation de la vitesse (v) on passe de l'angle de pivotement limitant filtré (α_{bg}) à l'angle de pivotement limitant non filtré (α_{bu}), lorsque la différence des deux valeurs dépasse une valeur prédéterminée.

8. Procédé selon la revendication 7, **caractérisé en ce qu'**on passe uniquement à la limite par l'angle de pivotement limitant non filtré (α_{bu}), lorsque la vitesse (v) dépasse la limite inférieure de la première plage.

9. Procédé selon la revendication 8, **caractérisé en ce qu'**ensuite lors d'une augmentation ou diminution de la vitesse (v) l'angle de pivotement déterminé est limité par l'angle de pivotement limitant non filtré (α_{bu}), dans la mesure où la vitesse (v) se trouve dans la première plage ou dans la deuxième plage.
